# FASCICULE DE BREVET EUROPEEN

(11) **EP 4 042 070 B1**
(45) Date de publication et mention de la délivrance du brevet: **27.12.2023**
(21) Numéro de dépôt: 20793021.5
(22) Date de dépôt: 05.10.2020
(51) Int. Cl.: F23R 3/32

(54) **CANNE DE PRÉVAPORISATION POUR UNE CHAMBRE DE COMBUSTION DE TURBOMACHINE**
VORVERDAMPFUNGSROHR FÜR DIE BRENNKAMMER EINES TURBINENMOTORS
PRE-VAPORISATION TUBE FOR A TURBINE ENGINE COMBUSTION CHAMBER

(30) Priorité: 08.10.2019 FR 1911137
(43) Date de publication de la demande: 17.08.2022
(73) Titulaire: Safran Helicopter Engines, 64510 Bordes (FR)
(72) Inventeur: LEDERLIN, Thomas Jean Olivier, 77550 Moissy-Cramayel (FR); LAURENT, Christophe, 77550 Moissy-Cramayel (FR); MAURIES, Guillaume Gerard Joel, 77550 Moissy-Cramayel (FR)
(74) Mandataire: Gevers & Orès
(86) Numéro de dépôt international: PCT/FR2020/000247
(87) Numéro de publication internationale: WO 2021/069808

(56) Documents cités:
- EP-A1- 3 150 918
- CN-A- 107 676 816
- FR-A1- 2 189 630
- FR-A1- 2 730 555
- US-A- 5 133 192

## Description

### DOMAINE TECHNIQUE

La présente invention concerne notamment une canne de prévaporisation pour une chambre de combustion de turbomachine, en particulier d'aéronef.

### ETAT DE LA TECHNIQUE

L'état de la technique comprend notamment les documents FR-A2-2 181 579 et FR-A1-3 013 805.

Le document CN107676816A décrit également une canne de prévaporisation pour une chambre de combustion de turbomachine.

D'une manière générale, une turbomachine d'aéronef comprend un générateur de gaz comportant notamment un ou plusieurs compresseurs, par exemple basse pression et haute pression, disposé(s) en amont d'une chambre de combustion. Par convention, dans la présente demande, les termes « amont » et « aval » sont définis par rapport au sens de circulation d'un flux de gaz, en particulier dans la turbomachine. De même, par convention dans la présente demande, les termes « interne » et « externe » sont définis radialement par rapport à un axe longitudinal, en particulier de la turbomachine.

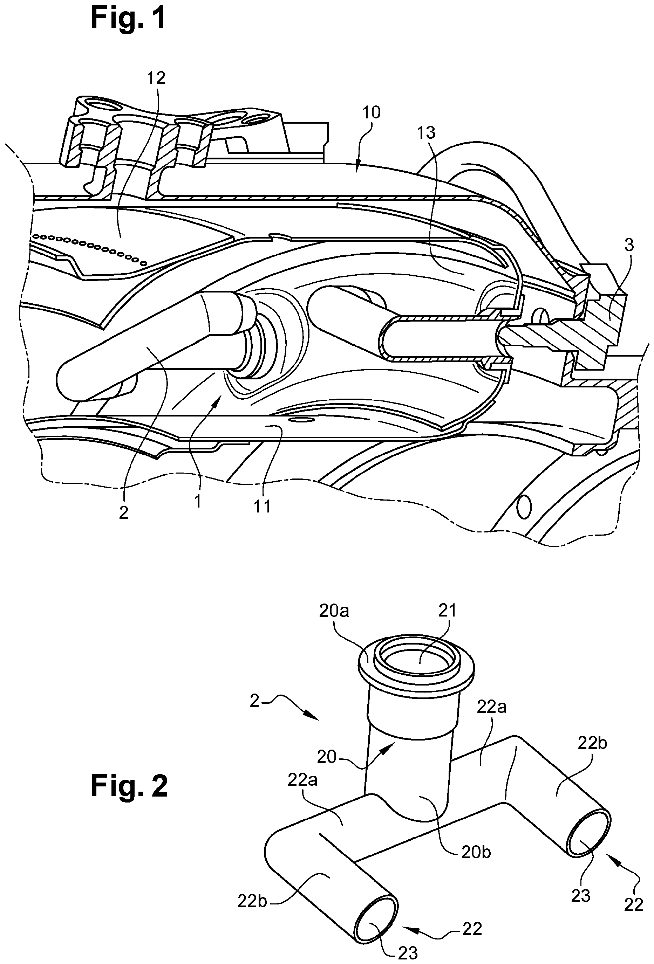

En référence à la figure 1, une turbomachine comprend classiquement une chambre 1 de combustion qui est entourée par un carter annulaire de chambre 10. La chambre 1 est délimitée par des parois annulaires interne 11 et externe 12 coaxiales réunies en amont par une paroi annulaire de fond 13 de la chambre 1. La paroi externe 12 est fixée au carter 10 qui porte une rangée annulaire d'injecteurs de carburant 3 de manière à alimenter la chambre 1 avec un mélange d'air et de carburant.

La chambre 1 est ici équipée de cannes de prévaporisation 2 qui sont chacune associées à un injecteur de carburant 3. Les cannes 2 sont ici montées sur la paroi de fond 13 de la chambre 1.

Chaque canne 2, telle que celle représentée à la figure 2, comprend un corps principal 20 de forme générale allongée et relié à deux bras ou embouts 22 coudés. Le corps principal 20 définit un premier conduit longitudinal interne 21 dans lequel est monté l'injecteur de carburant 3. Ce corps principal 20 comporte une première extrémité longitudinale 20a de fixation à une des parois 13 de la chambre 1 et une seconde extrémité longitudinale 20b.

Les embouts 22 sont chacun situés au niveau de la seconde extrémité longitudinale 20b et définissent des seconds conduits internes 23 coudés. Les embouts 22 comprennent chacun une première portion 22a qui est en communication fluidique avec le premier conduit 21 et une seconde portion 22b qui est destinée à déboucher dans la chambre 1.

Lorsqu'une combustion a lieu dans la chambre 1, les parois de la canne 2 chauffent et le carburant projeté par l'injecteur 3 sur les parois de la canne, s'évapore. Le mélange air-carburant pénètre dans la chambre 1 par les embouts 22 de la canne 2.

Une telle canne de prévaporisation a donc pour fonction de délivrer un débit calibré de mélange air-carburant dans une zone primaire disposée en amont de la chambre.

Sur certaines manoeuvres de fonctionnement de la turbomachine (par exemple : un départ à froid ou une accélération rapide) lorsqu'un débit important en carburant est fourni, la canne est amenée naturellement à se refroidir par le mélange air-carburant circulant à l'intérieur des cannes, notamment à travers les premier et second conduits internes. Le mélange riche en carburant alimentant la chambre à travers la canne, permet en outre de rendre la flamme (produite lors de la combustion) plus stable et mieux adaptée à la forme de la chambre de combustion.

Cependant, sur certaines manoeuvres de décélération brutale, la production de flamme lors de la combustion peut atteindre les embouts des cannes et les endommager (par exemple par des brûlures et/ou des criques).

La dégradation des cannes peut être ralentie par l'utilisation de matériaux de plus en plus résistants aux températures élevées. Or, ceci impose de maîtriser très précisément le matériau et les dimensions des cannes lors de leurs conceptions, ce qui génère des coûts de fabrication et de contrôle importants.

De manière générale, l'environnement thermique (chambre de combustion de gaz) dans lequel se situent les cannes cause leur dégradation progressive. L'insuffisance de refroidissement des embouts des cannes peut donc réduire leurs durées de vie et affecter les performances de la chambre de combustion.

Dans ce contexte, il est intéressant de pallier les inconvénients de l'art antérieur, en proposant une solution de refroidissement fiable et à durée de vie améliorée des cannes de prévaporisation d'une chambre de combustion de turbomachine.

### EXPOSE DE L'INVENTION

La présente invention propose une solution simple, efficace et économique aux inconvénients précités de l'art antérieur.

A cet effet, l'invention propose une canne de prévaporisation pour une chambre de combustion de turbomachine, en particulier d'aéronef, comportant :
- un corps principal de forme générale allongée et définissant un premier conduit longitudinal interne dans lequel est destiné à être monté un injecteur de carburant, ledit corps principal comportant une première extrémité longitudinale de fixation à une paroi de la chambre de combustion et une seconde extrémité longitudinale,
- au moins deux embouts disposés au niveau de ladite seconde extrémité longitudinale et définissant des seconds conduits internes, lesdits embouts comportant respectivement des premières portions sensiblement coaxiales et diamétralement opposées et des secondes portions sensiblement parallèles et orientées dans une même direction, lesdites premières portions étant en communication fluidique avec ledit premier conduit et lesdites secondes portions étant destinées à déboucher dans la chambre.

Selon l'invention, les secondes portions comprennent chacune deux parois cylindriques coaxiales, respectivement interne et externe, qui définissent entre elles une cavité annulaire. La paroi interne définit un passage interne et comprend des premiers orifices de mise en communication fluidique de ce passage avec ladite cavité annulaire.

Une telle configuration permet de refroidir efficacement les parois des embouts disposées dans la zone primaire de la chambre de combustion, tout en assurant la stabilité de la flamme en sortie des embouts dans la chambre. Le système de refroidissement selon l'invention consiste à implémenter une double paroi autour des embouts. Cette double paroi est alimentée en mélange air-carburant par les orifices de la paroi interne. La paroi externe est ainsi refroidie par impact de jets d'air formés par le passage du mélange air-carburant à travers les orifices de la paroi interne. En effet, un gradient de pression est généré lors du passage et de la circulation du mélange air-carburant dans la cavité annulaire de la double paroi. Ce gradient de pression permet ainsi de former les jets d'air qui refroidissent la paroi externe des embouts. Le corps principal et les premières portions des embouts de l'invention sont réalisés et fonctionnent de la même manière qu'une canne classique, de façon à assurer la fonction de pré-vaporisation.

L'invention présente par conséquent l'avantage de proposer une conception simple, offrant une très grande fiabilité, et peu pénalisante en termes de coûts et d'encombrement de la chambre de combustion.

Selon une particularité de l'invention, la paroi interne est reliée à son extrémité longitudinale opposée auxdites premières portions, à une paroi transversale comportant des seconds orifices de passage de fluide. L'ajout de cette paroi transversale percée d'orifices permet d'obstruer au moins en partie la section interne des embouts, ce qui génère une perte de charge lors du passage du mélange air-carburant par les orifices de cette paroi transversale en sortie d'embouts. La formation d'impact de jets d'air au passage des orifices de la paroi interne, est ainsi améliorée.

La canne de prévaporisation selon l'invention peut comprendre une ou plusieurs des caractéristiques suivantes, prises isolément les unes des autres ou en combinaison les unes avec les autres :
- ladite cavité annulaire a une section de sortie d'air de forme annulaire,
- ladite paroi transversale s'étend au droit d'une extrémité longitudinale libre de la paroi externe,
- lesdites parois interne et externe sont reliées entre elles par une paroi tronconique, du côté desdites premières portions,

- lesdits premiers orifices sont inclinés, d'amont en aval, radialement vers l'extérieur par rapport à une direction d'écoulement de fluide dans lesdites secondes portions et par rapport aux axes longitudinaux des secondes portions,
- ladite cavité annulaire comprend en outre une pluralité de perturbateurs d'écoulement de fluide, tels que des canaux, des picots, et/ou des ailettes,
- lesdits perturbateurs s'étendent radialement entre lesdites parois interne et externe,
- lesdits perturbateurs sont régulièrement répartis autour des axes longitudinaux des secondes portions,
- lesdits perturbateurs sont chacun situés entre deux premiers orifices adjacents,
- ladite paroi externe et ladite paroi transversale sont au moins en partie revêtues d'un matériau en céramique,
- lesdits embouts sont coudés ou non-coudés,
- lesdits seconds conduits internes sont coudés ou non-coudés,
- lesdits embouts sont coudés sensiblement à angle droit,
- lesdites secondes portions comportant lesdites parois externes ont chacune un diamètre externe supérieur au diamètre externe respectivement desdites premières portions.

L'invention a également pour objet une chambre de combustion de turbomachine, en particulier d'aéronef, comportant au moins une canne de prévaporisation telle que décrit précédemment.

L'invention peut également avoir pour objet une turbomachine (ne faisant pas partie de la protection demandée), en particulier d'aéronef, comportant une chambre de combustion équipée d'au moins une canne de prévaporisation telle que décrit précédemment.

La turbomachine peut être un turbopropulseur ou un turboréacteur.

### BREVE DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique partielle en perspective d'une chambre de combustion de turbomachine, équipée de cannes de prévaporisation.
[Fig.2] la figure 2 est une vue schématique en perspective d'une canne de prévaporisation selon l'art antérieur.
[Fig.3a] la figure 3a est une vue schématique en perspective d'une canne de prévaporisation selon un premier mode réalisation de l'invention, dont l'un des embouts est illustré sectionné suivant un plan de coupe III-III.
[Fig.3b] la figure 3b est une vue schématique en perspective de la canne de la figure 3a, dont les embouts sont illustrés selon un plan de coupe IV-IV de la figure 3a.
[Fig.3c] la figure 3c est une vue agrandie d'une partie de l'embout de la figure 3a, [Fig.4a] la figure 4a est une vue schématique partielle en coupe axiale d'un embout d'une canne selon un second mode de réalisation de l'invention.
[Fig.4b] la figure 4b est une vue schématique en perspective et de face de l'embout de la figure 4a.
[Fig.5a] la figure 5a est une vue schématique partielle en coupe axiale d'un embout d'une canne selon un troisième mode de réalisation de l'invention.
[Fig.5b] la figure 5b est une vue schématique en perspective et de face de l'embout de la figure 5a.
[Fig.6a] la figure 6a est une vue schématique partielle en coupe axiale d'un embout d'une canne selon un quatrième mode de réalisation de l'invention.
[Fig.6b] la figure 6b est une vue schématique en perspective et de face de l'embout de la figure 6a.
[Fig.7] la figure 7 est une vue schématique en coupe axiale de la canne de prévaporisation dans une chambre de combustion de turbomachine selon l'invention.

### DESCRIPTION DETAILLEE DE L'INVENTION

Les figures 1 et 2 ont été décrites dans ce qui précède et montrent un exemple d'une canne de prévaporisation 2 pour une chambre de combustion 1 de turbomachine selon l'art antérieur.

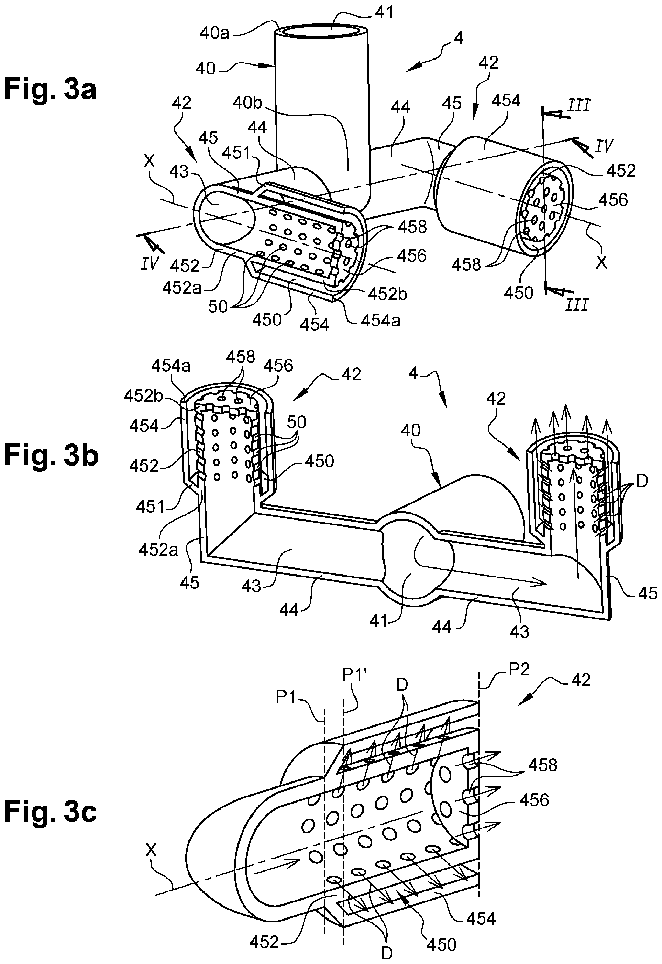

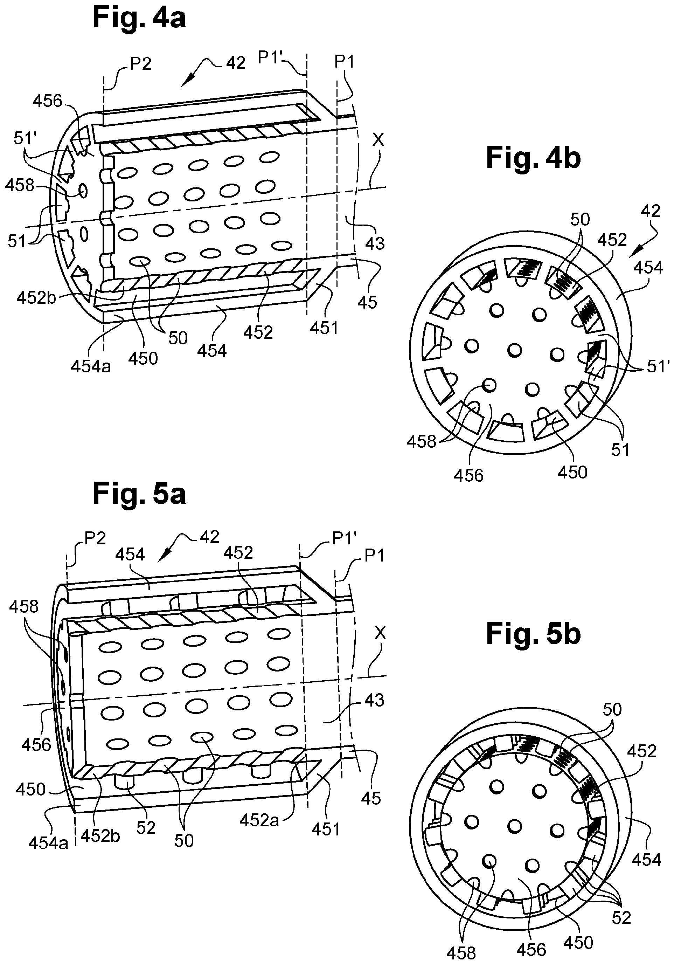

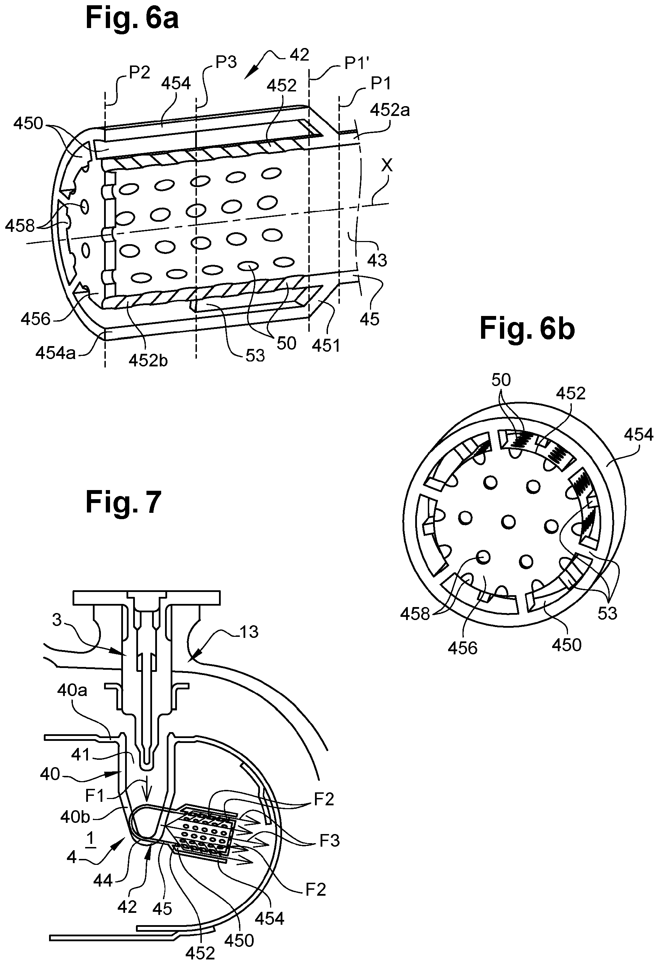

Les figures 3a à 3c représentent un premier mode de réalisation d'une canne de prévaporisation 4 selon l'invention, pour une chambre de combustion 1 de turbomachine. Les figures 4a et 4b illustrent un second mode de réalisation de cette canne 4. De même, les figures 5a, 5b et 6a, 6b illustrent, respectivement des troisième et quatrième modes de réalisation de cette canne 4.

En référence à la figure 3a, la canne 4 comprend un corps principal 40 de forme générale allongée et relié à deux embouts 42. Dans l'exemple représenté, les embouts 42 sont coudés sensiblement à angle droit.

Le corps principal 40 définit un premier conduit longitudinal interne 41 dans lequel est destiné à être monté un injecteur de carburant 3. Ce corps principal 40 comporte une première extrémité longitudinale 40a de fixation à une paroi de chambre 13 et une seconde extrémité longitudinale 40b.

Les embouts 42 sont situés au niveau de la seconde extrémité longitudinale 40b et définissent des seconds conduits internes 43. Dans l'exemple représenté, les seconds conduits internes 43 sont aussi coudés. Chaque embout 42 comprend une première portion 44 et une seconde portion 45. Les premières portions 44 sont sensiblement coaxiales et diamétralement opposées et les secondes portions 45 sont sensiblement parallèles et orientées dans une même direction. Chaque première portion 44 est en communication fluidique avec le premier conduit 41. Chaque seconde portion 45 est destinée à déboucher dans la chambre 1.

Par les termes « fluide » ou « communication fluidique », on désigne dans la présente demande un liquide (par exemple, un carburant) ou un gaz (par exemple, l'air) ou un mélange des deux (un mélange air-carburant dans le cas de la chambre de combustion).

Selon l'invention, les secondes portions 45 des embouts 42 comprennent chacune une paroi cylindrique interne 452 et une paroi cylindrique externe 454.

Les parois cylindriques 452, 454 de chacun des embouts 42 sont coaxiales et s'étendent autour d'un axe X de révolution. Les parois cylindriques 452, 454 définissent entre elles une cavité annulaire 450 qui s'étend également autour de l'axe X.

Les parois cylindriques 452, 454 de chacun des embouts 42 sont reliées entre elles par une paroi tronconique 451. Les parois interne 452, externe 454 et tronconique 451 sont monoblocs avec la canne 4. Cette paroi tronconique 451 comprend un bord périphérique interne relié à la paroi interne 452 via sa première extrémité de liaison 542a du côté de la première portion 44. Ce bord interne de la paroi 451 passe sensiblement par un plan P1 et situé du côté aval de la première portion 44 et du corps principal 40 de la canne 4. La paroi tronconique 451 comprend en outre un bord périphérique externe relié à la paroi externe 454. Ce bord externe de la paroi 451 passe sensiblement par un plan P1 '. Les plans P1 et P1' sont sensiblement perpendiculaires à l'axe X. Dans l'exemple, les plans P1 et P1' sont décalés de façon à réaliser la forme tronconique à la paroi 451.

Chacune des parois internes 452 des embouts 42, d'amont en aval, s'étend longitudinalement autour de l'axe X entre la première extrémité de liaison 452a à la première portion 44 et une seconde extrémité longitudinale de liaison 452b à une paroi transversale 456.

En référence aux figures 3b et 3c, chacune des parois internes 452 définit un passage interne correspondant à une portion du second conduit interne 43 de la seconde portion 45. Ce passage interne de la paroi interne 452 est en communication fluidique avec le premier conduit interne 41 à travers cette portion du second conduit interne 43.

Chacune des parois internes 452 comprend des orifices 50 configurés pour assurer une communication fluidique (de préférence un mélange air-carburant destiné à alimenter la chambre de combustion) entre le passage interne de la paroi interne 452 et la cavité annulaire 450. Ces orifices 50 débouchent donc dans la cavité 450 suivant une direction D d'écoulement de fluide. Les orifices 50 peuvent être répartis régulièrement et circonférentiellement autour de la paroi interne 452. Ces orifices 50 peuvent être inclinés, d'amont en aval, radialement vers l'extérieur de la direction D et de l'axe X. Les orifices 50 peuvent être répartis sensiblement depuis la paroi tronconique 451 jusqu'à la seconde extrémité 452b. Les orifices 50 peuvent avoir un diamètre inférieur à 1 mm. Sur les exemples, les orifices 50 sont agencés de façon à former des rangées longitudinales d'orifices 50.

Chacune des parois internes 452 est reliée donc à la paroi transversale 456 disposée via sa seconde extrémité 452b. La paroi transversale 456 passe sensiblement par un plan P2 qui est perpendiculaire à l'axe X. Cette paroi transversale 456 permet d'obstruer au moins en partie la section interne de la paroi interne 452. La paroi transversale 456 est percée avec des seconds orifices 458 configurés pour assurer un passage de fluide provenant du premier conduit interne 41 en passant par le second conduit interne 43. Ces orifices 458 sont répartis régulièrement sur la paroi transversale 456. Les seconds orifices 458 ont, par exemple des diamètres équivalent ou inférieur aux diamètres des premiers orifices 50. Cette paroi transversale 456 et les seconds orifices 458 sont destinés à déboucher dans la chambre 1.

Chacune des parois externes 454 des embouts 42, d'amont en aval, s'étend longitudinalement autour de l'axe X entre le bord externe de la paroi tronconique 451 et son extrémité longitudinale libre 454a. Cette extrémité libre 454a passe sensiblement par le plan P2, de façon à l'aligner avec la paroi transversale 456. L'extrémité libre 454a est destinée à déboucher dans la zone primaire de la chambre 1. La paroi externe 454 comprend une surface interne destinée à recevoir des impacts de jets de fluide F2 en provenance du passage interne de la paroi interne 452 à travers les orifices 50.

La cavité annulaire 450 de chacun des embouts 42, d'amont en aval, s'étend autour de l'axe X sensiblement entre les plans P1 et P2. Cette cavité 450 peut avoir une section de sortie de fluide qui a une forme annulaire. La distance radiale entre les parois interne 452 et externe 454 formant la cavité 450, peut être sensiblement de 2 à 8 fois plus petite que le diamètre interne de la paroi interne 452. La cavité 450 est destinée à déboucher dans la chambre 1.

La canne 4 des second, troisième et quatrième modes de réalisation se distinguent de la canne 4 du premier mode de réalisation par la présence d'une pluralité de perturbateurs d'écoulement de fluide dans la cavité annulaire 450.

L'utilisation de perturbateurs permet de créer des turbulences dans l'écoulement D de fluide. Les impacts de jets de fluide F2 sur la surface interne des parois externes 454 sont ainsi améliorés.

En référence au second mode de réalisation (figures 4a et 4b), les perturbateurs sont des voiles longitudinaux 51'. Ces voiles 51' définissent entre eux des canaux longitudinaux 51. Chacun des voiles 51' est relié de la paroi interne 452 jusqu'à la paroi externe 454. Les voiles 51' s'étendent sensiblement entre les plans P1 et P2 et sont répartis régulièrement et circonférentiellement dans la cavité 450.

Sur les exemples, une rangée longitudinale des premiers orifices 50 débouche dans chacun des canaux 51.

En référence au troisième mode de réalisation (figures 5a et 5b), les perturbateurs sont des picots 52. Chacun des picots 52 s'étend radialement de la paroi interne 452 jusqu'à la paroi externe 454. Ces picots 52 sont répartis régulièrement et circonférentiellement autour de l'axe X de chacun des secondes portions 45.

Sur les exemples, les picots 52 forment des rangées longitudinales qui s'alternent circonférentiellement avec les rangées longitudinales des premiers orifices 50.

En référence au quatrième mode de réalisation (figures 5a et 5b), les perturbateurs sont des ailettes 53. Chacune des ailettes 53 s'étend aussi radialement de la paroi interne 452 jusqu'à la paroi externe 454. Ces ailettes 53 s'étendent partiellement le long de la cavité 450.

Sur les exemples, une des ailettes 53 s'étend de la paroi tronconique 451 (à savoir suivant le plan P1) jusqu'à sensiblement la moitié de la longueur de la cavité 450. Cette moitié de la longueur de la cavité 450 est sensiblement située dans un plan P3 qui est parallèle aux plans P1 et P2. Une ailette 53 adjacente s'étend des extrémités 452b, 454a (à savoir suivant le plan P2) jusqu'à cette moitié de longueur de la cavité 450 (à savoir suivant le plan P3).

Par ailleurs, les ailettes 53 délimitent entre elles une rangée longitudinale des premiers orifices 50.

La canne 4 selon l'invention peut être réalisée par fabrication additive.

La paroi externe 454 et/ou la paroi transversale 456 peuvent comprendre un revêtement en céramique destiné à augmenter la tenue thermique des parois en contact direct avec la zone primaire, lorsque la canne 4 est montée dans la chambre de combustion 1.

En référence à la figure 7, nous allons maintenant décrire la canne selon l'invention installée dans une chambre de combustion de turbomachine d'aéronef, et évoquer son fonctionnement.

L'agencement de cannes 4 dans la chambre 1 a été décrit de manière générale dans ce qui précède en référence aux figures 1 et 2.

En particulier, le premier conduit interne 41 de la canne 4 est destiné à recevoir un mélange air-carburant de l'injecteur de carburant 3.

La combustion du mélange air-carburant est initiée via un ou plusieurs dispositifs d'allumage (non représenté) fixés sur la paroi externe 12 de la chambre 1.

Lors de cette combustion, les parois de la canne 4 chauffent et le carburant projeté par l'injecteur 3 sur les parois de la canne, s'évapore. Le mélange air-carburant pénètre dans la chambre 1 par les embouts 45 de la canne 4.

Afin de protéger les embouts 45 en particulier vis-à-vis du rayonnement thermique engendré par la combustion, les embouts 45 comprennent chacun une double paroi formée de la paroi interne 452 percée avec des premiers orifices 50 et de la paroi externe 454. Ces parois interne 452 et externe 454 délimitent donc entre elles la cavité annulaire 450. Par ailleurs, la paroi interne 452 est liée, via sa seconde extrémité 452b, à la paroi transversale 456 percée avec des seconds orifices 458.

En référence aux figures 3b, 3c et 7, les flèches F1, F2, F3 sur les figures représentent une trajectoire et une direction D d'écoulement du mélange air-carburant à l'intérieur des embouts 45. Un mélange air-carburant F1, en provenance du premier conduit interne 41, traverse les seconds conduits internes 43 pour se répandre dans la chambre 1 à travers les cavités annulaires 450 et les seconds orifices 458.

Pour cela, d'une part, le mélange air-carburant F1 traverse les premiers orifices 50 pour passer dans les cavités 450 puis dans la chambre 1. Ce mélange air-carburant F1 génère des jets d'air F2 obtenus au passage des premiers orifices 50. Ceci permet de refroidir par impact de jets d'air F2 les parois externes 454 des embouts 42.

D'autre part, le mélange air-carburant F1 traverse les seconds orifices 458 et passe dans la chambre 1, de façon à alimenter directement la chambre en carburant et air F3.

L'impact de jets d'air F2 refroidissant les parois externes 454, peut être renforcé par l'inclinaison des premiers orifices 50 suivant la direction D d'écoulement du mélange et la traversée du mélange F1 à travers les seconds orifices 458.

Ainsi, le mélange air-carburant parcourant la canne 4 selon l'invention est capable de refroidir de façon effective la totalité des parois externes 454 des embouts 42, puis être guidé dans la chambre 1.

La canne selon l'invention apporte plusieurs avantages qui sont notamment de :
- optimiser la durée de vie des cannes de prévaporisation en améliorant le refroidissement des embouts ;
- conserver la fonction de pré-vaporisation des cannes ;
- limiter le coût en maintenance des cannes et de la chambre de combustion ;
- s'adapter facilement aux générateurs de gaz existants.

Globalement, cette solution proposée est simple, efficace et économique à réaliser et à assembler sur une turbomachine d'aéronef, tout en assurant un refroidissement optimal et une durée de vie améliorée des cannes de prévaporisation d'une chambre de combustion.

## Revendications

1. Canne de prévaporisation (4) pour une chambre de combustion (1) de turbomachine, en particulier d'aéronef, comportant :
- un corps principal (40) de forme générale allongée et définissant un premier conduit longitudinal interne (41) dans lequel est destiné à être monté un injecteur de carburant (3), ledit corps principal (40) comportant une première extrémité longitudinale de fixation (40a) à une paroi (13) de la chambre de combustion (1) et une seconde extrémité longitudinale (40b),
- au moins deux embouts (42) disposés au niveau de ladite seconde extrémité longitudinale (40b) et définissant des seconds conduits internes (43), lesdits embouts (42) comportant respectivement des premières portions (44) sensiblement coaxiales et diamétralement opposées et des secondes portions (45) sensiblement parallèles et orientées dans une même direction, lesdites premières portions (44) étant en communication fluidique avec ledit premier conduit (41) et lesdites secondes portions (45) étant destinées à déboucher dans la chambre (1), lesdites secondes portions (45) comprenant chacune deux parois cylindriques coaxiales, respectivement interne (452) et externe (454), qui définissent entre elles une cavité annulaire (450), et la paroi interne (452) définissant un passage interne, **caractérisée en ce que** ladite paroi interne (452) e comprend des premiers orifices (50) de mise en communication fluidique de ce passage avec ladite cavité annulaire (450).

2. Canne selon la revendication 1, dans laquelle ladite cavité annulaire (450) a une section de sortie de fluide de forme annulaire.

3. Canne selon la revendication 1 ou 2, dans laquelle ladite paroi interne (452) est reliée à son extrémité longitudinale (452b) opposée auxdites premières portions (44) à une paroi transversale (456) comportant des seconds orifices (458) de passage de fluide.

4. Canne selon la revendication précédente, dans laquelle ladite paroi transversale (456) s'étend au droit de d'une extrémité longitudinale libre (454a) de la paroi externe (454).

5. Canne selon l'une des revendications précédentes, dans laquelle lesdites parois interne (452) et externe (454) sont reliées entre elles par une paroi tronconique (451), du côté desdits premières portions (44).

6. Canne selon l'une des revendications précédentes, dans laquelle lesdits premiers orifices (50) sont inclinés, d'amont en aval, radialement vers l'extérieur par rapport à une direction (D) d'écoulement de fluide dans lesdites secondes portions (45) et par rapport aux axe (X) longitudinaux de ces secondes portions (45).

7. Canne selon l'une des revendications précédentes, dans laquelle ladite cavité annulaire (450) comprend en outre une pluralité de perturbateurs d'écoulement de fluide, tels que des canaux (51), des picots (52), et/ou des ailettes (53).

8. Canne selon la revendication précédente, dans laquelle lesdits perturbateurs s'étendent radialement entre lesdites parois interne (452) et externe (454) et sont régulièrement répartis autour des axes X des secondes portions (45).

9. Canne selon la revendication 7 ou 8, dans laquelle lesdits perturbateurs d'écoulement de fluide sont chacun situés entre deux premiers orifices (50) adjacents.

10. Canne selon l'une des revendications 3 à 9, dans laquelle ladite paroi externe (454) et ladite paroi transversale (456) sont au moins en partie revêtues d'un matériau en céramique.

11. Canne selon l'une des revendications 1 à 10, dans laquelle les embouts (42) sont coudés.

12. Canne selon la revendication 11, dans laquelle les embouts (42) sont coudés sensiblement à angle droit.

13. Canne selon l'une des revendications 1 à 12, dans laquelle lesdites secondes portions (45) comportant lesdites parois externes (454) ont chacune un diamètre externe supérieur au diamètre externe respectivement desdites premières portions (44).

14. Chambre de combustion (1) de turbomachine, en particulier d'aéronef, **caractérisée en ce qu'**elle comprend au moins une canne de prévaporisation (4) selon l'une des revendications précédentes.

## Patentansprüche

1. Vorverdampfungsrohr (4) für eine Brennkammer (1) einer Turbomaschine, insbesondere eines Luftfahrzeugs, umfassend:
- einen Hauptkörper (40) mit allgemein langgestreckter Form und der eine erste innere längslaufende Leitung (41) definiert, in der ein Kraftstoffeinspritzer (3) dazu vorgesehen ist, eingebaut zu werden, wobei der Hauptkörper (40) ein erstes Längsende zur Befestigung (40a) an einer Wand (13) der Brennkammer (1) und ein zweites Längsende (40b) umfasst,
- mindestens zwei Endstücke (42), die am zweiten Längsende (40b) angeordnet sind und zweite innere Leitungen (43) definieren, wobei die Endstücke (42) jeweils erste Abschnitte (44), die im Wesentlichen koaxial und diametral entgegengesetzt sind, und zweite Abschnitte (45), die im Wesentlichen parallel und in einer gleichen Richtung ausgerichtet sind, umfassen, wobei die ersten Abschnitte (44) mit der ersten Leitung (41) in strömungstechnischer Kommunikation stehen und die zweiten Abschnitte (45) dazu vorgesehen sind, in die Kammer (1) zu münden, wobei die zweiten Abschnitte (45) jeweils zwei koaxiale zylindrische Wände, eine innere (452) bzw. eine äußere (454), umfassen, die untereinander einen ringförmigen Hohlraum (450) definieren, und wobei die innere Wand (452) einen inneren Durchgang definiert, **dadurch gekennzeichnet, dass** die innere Wand (452) erste Öffnungen (50) umfasst, um diesen Durchgang mit dem ringförmigen Hohlraum (450) in strömungstechnische Kommunikation zu setzen.

2. Rohr nach Anspruch 1, wobei der ringförmige Hohlraum (450) einen ringförmigen Fluidaustrittsquerschnitt aufweist.

3. Rohr nach Anspruch 1 oder 2, wobei die innere Wand (452) an ihrem entgegengesetzten Längsende (452b) an den ersten Abschnitten (44) mit einer Querwand (456) verbunden ist, die zweite Fluiddurchgangsöffnungen (458) umfasst.

4. Rohr nach dem vorstehenden Anspruch, wobei sich die Querwand (456) über einem freien Längsende (454a) der äußeren Wand (454) erstreckt.

5. Rohr nach einem der vorstehenden Ansprüche, wobei die innere (452) und die äußere (454) Wand auf der Seite der ersten Abschnitte (44) durch eine kegelförmige Wand (451) verbunden sind.

6. Rohr nach einem der vorstehenden Ansprüche, wobei die ersten Öffnungen (50) von stromaufwärts nach stromabwärts in Bezug auf eine Fluidablaufrichtung (D) in den zweiten Abschnitten (45) und in Bezug auf die Längsachsen (X) dieser zweiten Abschnitte (45) radial zur Außenseite geneigt sind.

7. Rohr nach einem der vorstehenden Ansprüche, wobei der ringförmige Hohlraum (450) weiter eine Vielzahl von Fluidablauftrennelementen, wie beispielsweise Kanäle (51), Stifte (52) und/oder Flügel (53), umfasst.

8. Rohr nach dem vorstehenden Anspruch, wobei sich die Trennelemente zwischen der inneren (452) und der äußeren (454) Wand radial erstrecken und regelmäßig um die X-Achsen der zweiten Abschnitte (45) verteilt sind.

9. Rohr nach Anspruch 7 oder 8, wobei die Fluidablauftrennelemente jeweils zwischen zwei benachbarten ersten Öffnungen (50) gelegen sind.

10. Rohr nach einem der Ansprüche 3 bis 9, wobei die äußere Wand (454) und die Querwand (456) mindestens teilweise mit einem Keramikmaterial beschichtet sind.

11. Rohr nach einem der Ansprüche 1 bis 10, wobei die Endstücke (42) abgewinkelt sind.

12. Rohr nach Anspruch 11, wobei die Endstücke (42) im Wesentlichen im rechten Winkel abgewinkelt sind.

13. Rohr nach einem der Ansprüche 1 bis 12, wobei die zweiten Abschnitte (45), die die äußeren Wände (454) umfassen, jeweils einen Außendurchmesser aufweisen, der jeweils größer ist als der Außendurchmesser der ersten Abschnitte (44).

14. Brennkammer (1) einer Turbomaschine, insbesondere eines Luftfahrzeugs, **dadurch gekennzeichnet, dass** sie mindestens ein Vorverdampfungsrohr (4) nach einem der vorstehenden Ansprüche umfasst.

## Claims

1. A pre-vaporisation tube (4) for combustion chamber (1) of a turbine engine, in particular for an aircraft, comprising:
- a main body (40) of generally elongated shape and defining a first internal longitudinal conduit (41) wherein a fuel injector (3) is intended to be mounted, said main body (40) comprising a first longitudinal end (40a) for fastening to a wall (13) of the combustion chamber (1) and a second longitudinal end (40b),
- at least two end pieces (42) arranged at the level of said second longitudinal end (40b) and defining second internal conduits (43), said end pieces (42) respectively comprising first portions (44) which are substantially coaxial and diametrically opposed and second portions (45) which are substantially parallel and oriented in a same direction, said first portions (44) being in fluid communication with said first conduit (41) and said second portions (45) being intended to open into the chamber (1), said second portions (45) each comprising two coaxial cylindrical walls, respectively internal (452) and external (454), which define between them an annular cavity (450), and the internal wall (452) defines an internal passage, **characterised in that** said internal wall (452) comprises first orifices (50) for placing this passage in fluid communication with said annular cavity (450).

2. The tube of claim 1, wherein said annular cavity (450) has an annular shaped fluid outlet section.

3. The tube according to claim 1 or 2, wherein said internal wall (452) is connected at its longitudinal end (452b) opposite said first portions (44) to a transverse wall (456) comprising second fluid passage orifices (458).

4. The tube according to the preceding claim, wherein said transverse wall (456) extends in line with a free longitudinal end (454a) of the external wall (454).

5. The tube according to one of the preceding claims, wherein said internal (452) and external (454) walls are connected to each other by a frustoconical wall (451), on the side of said first portions (44).

6. The tube according to one of the preceding claims, wherein said first orifices (50) are inclined, from upstream to downstream, radially outwards with respect to a direction (D) of fluid flow in said second portions (45) and with respect to the longitudinal axes (X) of these second portions (45).

7. The tube according to any of the preceding claims, wherein said annular cavity (450) further comprises a plurality of fluid flow disruptors, such as channels (51), spikes (52), and/or fins (53).

8. The tube according to the preceding claim, wherein said disruptors extend radially between said internal (452) and external (454) walls and are regularly distributed around the axes X of the second portions (45).

9. The tube of claim 7 or 8, wherein said fluid flow disruptors are each located between two adjacent first orifices (50).

10. The tube of any of claims 3 to 9, wherein said external wall (454) and said transverse wall (456) are at least partially coated with a ceramic material.

11. The tube according to any of claims 1 to 10, wherein the end pieces (42) are bent.

12. The tube of claim 11, wherein the end pieces (42) are bent substantially at right angles.

13. The tube according to any one of claims 1 to 12, wherein said second portions (45) comprising said external walls (454) each have an external diameter greater than the external diameter of said first portions (44), respectively.

14. A combustion chamber (1) of a turbine engine, in particular for an aircraft, **characterised in that** it comprises at least one pre-vaporisation tube (4) according to one of the preceding claims.
